# EUROPÄISCHE PATENTSCHRIFT

(11) **EP 2 904 124 B1**
(45) Veröffentlichungstag und Bekanntmachung des Hinweises auf die Patenterteilung: **07.12.2016**
(21) Anmeldenummer: 13771492.9
(22) Anmeldetag: 02.10.2013
(51) Int. Cl.: B21J 5/06, B65G 49/00, B65G 65/00, B65G 65/02, B65G 69/20, C21D 1/673, F27B 9/02, F27B 9/40, F27D 3/06, C21D 9/00, F27B 9/24, B21J 1/06, C21D 9/48

(54) **HANDHABUNGSEINRICHTUNG**
HANDLING DEVICE
DISPOSITIF DE MANIEMENT

(30) Priorität: 04.10.2012 DE 102012218159
(43) Veröffentlichungstag der Anmeldung: 12.08.2015
(73) Patentinhaber: Ebner Industrieofenbau GmbH, 4060 Leonding (AT)
(72) Erfinder: EBNER, Robert, A-4060 Leonding (AT); EBNER, Fritz Josef, A-4073 Wilhering (AT); STEINHEIMER, Rudolf, A-4563 Micheldorf (AT)
(74) Vertreter: Dilg, Haeusler, Schindelmann Patentanwaltsgesellschaft mbH
(86) Internationale Anmeldenummer: PCT/EP2013/070554
(87) Internationale Veröffentlichungsnummer: WO 2014/053550

(56) Entgegenhaltungen:
- EP-A2- 2 204 460
- DE-A1- 3 102 638
- DE-A1-102009 019 496
- DE-A1-102009 042 026
- DE-A1-102010 060 207

## Beschreibung

### Technisches Gebiet

Die vorliegende Erfindung betrifft eine Handhabungseinrichtung zum Handhaben eines Metallbauteils zwischen einer Ofeneinrichtung und einer Weiterverarbeitungseinrichtung, eine Temperierungsvorrichtung zum Herstellen eines Metallbauteils und ein Verfahren zum Handhaben eines Metallbauteils.

### Hintergrund der Erfindung

In der metallverarbeitenden Industrie, wie beispielsweise im Karosseriebau für Kraftfahrzeuge, werden Bauteile bevorzugt, welche ein geringes Gewicht bei gleichzeitig gewünschter Festigkeit und gewünschtem Verformungsverhalten aufweisen. In Bereichen der Karosserie, die im Fall eines Crash besonders hohen Belastungen ausgesetzt sein können, werden beispielsweise pressgehärtete Bauteile eingesetzt, die aus hochfesten Stählen erzeugt sind und unterschiedliche duktile Bereiche aufweisen. Als Beispiele für solche Bauteile sind die A- und B-Säule, die Stoßstange und Türaufprallträger eines Kraftfahrzeugs zu nennen.

Bauteile mit unterschiedlichen duktilen Bereichen werden beispielsweise mittels Presshärtens hergestellt. Ein Ausgangsmaterial bzw. eine Platine wird vor dem Presshärten erwärmt und anschließend in einem Presshärtewerkzeug umgeformt und abgeschreckt. Das Presshärtewerkzeug kann hierfür Einrichtungen zum Kühlen oder Erwärmen der Platine aufweisen.

Um eine gewünschte Duktilität in bestimmten Bereichen des Bauteils herzustellen, können mittels unterschiedlichen Abkühlzeiten während des Härtens des Bauteils unterschiedliche Gefüge (z.B. Martensit oder Ferrit) in den Bereichen eingestellt werden. Je genauer während des Härtens die Temperatur des Bauteils einstellbar ist, desto genauer ist die Einstellung des gewünschten Gefüges möglich. Die Temperaturen und die Abkühlzeiten sind während der Herstellung allerdings sehr schwer vorgebbar, da beispielsweise Wegstrecken zwischen einem Ofen und einer Weiterverarbeitungseinrichtung überbrückt werden müssen, in welchen das Bauteil nicht regulierbar abkühlt.

### Darstellung der Erfindung

Es ist eine Aufgabe der vorliegenden Erfindung, eine Handhabungsvorrichtung für ein Metallbauteil mit bestimmten duktilen Eigenschaften zu schaffen, wobei genauere Temperaturen des Metalls und genauere Abkühlzeiten während des Herstellverfahrens vorgebbar sind.

Die Aufgabe wird durch eine Handhabungseinrichtung zum Handhaben eines Metallbauteils zwischen einer Ofeneinrichtung und einer Weiterverarbeitungseinrichtung, durch eine Temperierungsvorrichtung zum Herstellen eines Metallbauteils und durch ein Verfahren zum Handhaben eines Metallbauteils gemäß den unabhängigen Ansprüchen gelöst.

Gemäß einem ersten Aspekt der vorliegenden Erfindung wird eine Handhabungseinrichtung zum Handhaben eines Metallbauteils zwischen einer Ofeneinrichtung und einer Weiterverarbeitungseinrichtung beschrieben. Die Handhabungseinrichtung weist eine Temperierkammer auf, in welcher das Metallbauteil einlegbar ist. Die Temperierkammer weist eine Temperiereinrichtung zum Temperieren des Metallbauteils auf. Die Temperiereinrichtung stellt eine Temperatur in der Temperierkammer ein. Ferner weist die Temperierkammer eine Verfahreinrichtung auf, welche derart eingerichtet ist, dass die Temperierkammer zwischen einer Aufnahmeposition und einer Abgabeposition verfahrbar ist. In der Aufnahmeposition ist das Metallbauteil aus der Ofeneinrichtung in die Temperierkammer beförderbar und in der Abgabeposition ist das Metallbauteil von der Temperierkammer zu der Weiterverarbeitungseinrichtung beförderbar. Eine Fördereinrichtung ist derart eingerichtet, dass das Metallbauteil in der Aufnahmeposition zwischen der Ofeneinrichtung und der Temperierkammer beförderbar ist und dass das Metallbauteil in der Abgabeposition zwischen der Temperierkammer und der Abgabeposition beförderbar ist.

Gemäß einer weiteren beispielhaften Ausführungsform wird ein Handhabungsverfahren zum Handhaben eines Metallbauteils beschrieben. Gemäß dem Handhabungsverfahren wird eine Temperierkammer einer Handhabungseinrichtung mittels einer Verfahreinrichtung in eine Aufnahmeposition verfahren, in welcher das Metallbauteil aus einer Ofeneinrichtung in die Temperierkammer aufnehmbar ist. Die Temperierkammer weist eine Temperiereinrichtung zum Temperieren des Metallbauteils auf. Das Metallbauteil wird von der Ofeneinrichtung in die Temperierkammer mittels einer Fördereinrichtung befördert. Die Temperierkammer wird in eine Abgabeposition verfahren, in welcher das Metallbauteil von der Temperierkammer an eine Weiterverarbeitungseinrichtung abgebbar ist. Das Metallbauteil wird von der Temperierkammer zu der Abgabeposition mittels der Fördereinrichtung befördert. Die Temperiereinrichtung temperiert das Metallbauteil, wenn sich das Metallbauteil in der Temperierkammer befindet. Die Temperiereinrichtung stellt dazu beispielsweise eine vorgebbare Temperatur in der Temperierkammer ein.

Das Metallbauteil beschreibt in der vorliegenden Anmeldung ein Metallwerkstück bzw. ein Halbzeug (Metallplatine), aus welchem ein Bauteil mit einer gewünschten Form und Duktilität hergestellt wird. Das Metallbauteil ist z.B. eine Metallplatine. Die Metallplatine ist beispielsweise ein Metallblech mit einer Dicke von weniger als ungefähr 2 cm, insbesondere weniger als ungefähr 1 cm. Mittels des Metallbauteils kann beispielsweise eine Metallvorrichtung, wie z.B. eine Kraftfahrzeugkomponente hergestellt werden. Beispielsweise kann die Kraftfahrzeugkomponente eine A- oder B-Säule eines Kraftfahrzeugs, eine Stoßstange oder ein Türaufprallträger eines Kraftfahrzeugs darstellen.

Das Metallbauteil kann aus einem Stahl bestehen, der neben Eisen herstellungsbedingte Verunreinigungen aufweisen kann. Ferner kann das Metallbauteil Legierungsbestandteile aufweisen, wie beispielsweise (in Gew.-%) C: 0,02-0,6%, Mn: 0,5-2,0%, Al: 0,01-0,06%, Si: 0,1 %bis zu 0,4%, Cr: 0,1% bis zu 1,2%, P: 0 bis zu 0,035%, S: 0 bis zu 0,035%. Ferner kann das Metallbauteil eines oder mehrere Elemente aus der Gruppe aus Ti, B, Mo, Ni, Cu und/oder N aufweisen, wobei Ti in einem Gehalt von 0 bis zu 0,05%, Cu in einem Gehalt von 0 bis zu 0,01%, B in Gehalten von 0,0008 bis 0,005%, Mo in Gehalten von 0 bis zu 0,3%, Ni in Gehalten von 0 bis zu 0,4%, N in Gehalten von 0 bis zu 0,01%, enthalten sein können. Besondere Bedeutung im Hinblick auf die Festigkeit des Bauteils kommt dem jeweiligen C-Gehalt zu. Die Gehalte an Si, Mn, Cr und B dienen z.B. der Bildung des Bainits und Verringern die Entstehung größerer Martensitmengen im Gefüge des Bauteils.

Die Ofeneinrichtung dient zum Erhitzen des Metallbauteils, um diese anschließend in einem Härteprozess, insbesondere in einem Presshärteprozess, weiterzuverarbeiten. Das Metallbauteil wird in der Ofeneinrichtung insbesondere auf Austenitisierungstemperatur erhitzt. Die Austenitisierungstemperatur beträgt beispielsweise ungefähr 750° C bis ungefähr 1000° C, wobei die untere Grenze der Austenitisierungstemperatur von dem Material des Metallbauteils (Stahl- und Legierungsanteile) abhängt. Oberhalb der Austenitisierungstemperatur liegt ein vollständiges austenitisches Gefüge im Metallbauteil vor.

Die Ofeneinrichtung kann beispielsweise eine Vielzahl von weiteren Ofenebenen bzw. Ofenmodulen aufweisen, welche beispielsweise nebeneinander oder übereinander angeordnet sind. In jedes der Ofenmodule kann beispielsweise ein entsprechendes Metallbauteil eingelegt und erwärmt werden. Die Temperierkammer kann in eine entsprechende Vielzahl von verschiedenen Aufnahmepositionen verfahren werden, so dass die entsprechenden Metallbauteile aus den jeweiligen Ofenmodulen entnehmbar sind und in die Temperierkammer beförderbar sind. In einer bevorzugten Ausführungsform weist die Ofeneinrichtung insbesondere sechs bis acht übereinander angeordnete Ofenebenen bzw. Ofenmodule auf.

Als Weiterverarbeitungseinrichtung kann im Folgenden ein einfacher Ablagetisch verstanden werden, auf welchem das Metallbauteil abgelegt werden kann. Ferner kann die Weiterverarbeitungseinrichtung eine Werkzeugeinrichtung, wie z.B. ein Umformwerkzeug oder insbesondere ein Presshärtewerkzeug, aufweisen. Ferner kann als Werkzeugeinrichtung eine Montiereinheit oder ein Schweißroboter verstanden werden.

Die Verfahreinrichtung kann beispielsweise ein Gerüst aus Metallträgern aufweisen, entlang welcher Führungsschienen angeordnet sind. Die Temperierkammer kann beispielsweise verfahrbar entlang dieser Führungsschienen angeordnet bzw. gekoppelt sein.

Die Temperierkammer weist beispielsweise ein Gehäuse auf, welches ein Innenvolumen ausbildet, in welches das Metallbauteil einlegbar ist. Das Gehäuse der Temperierkammer kann aus einem metallischen Korpus hergestellt sein. Ferner kann die Temperierkammer zwei Gehäusehälften aufweisen, welche zueinander beweglich sind. Dabei können sich die Gehäusehälften einerseits voneinander fort bewegen, um das Innenvolumen zugänglich zu machen und um somit das Metallbauteil einzulegen. Die Gehäusehälften können sich dann wieder zueinander hin bewegen, um das Innenvolumen einzuhausen.

Die Temperiereinrichtung ist derart ausgebildet, dass das Gehäuse bzw. die innere Oberfläche des Gehäuses zumindest einen Temperaturbereich mit einer gewünschten Temperatur aufweist. Zusätzlich kann die Temperiereinrichtung derart ausgebildet sein, dass an dem Gehäuse bzw. an der inneren Oberfläche eine Vielzahl von unterschiedlichen Temperaturbereichen einstellbar ist, so dass entsprechende Temperaturzonen bzw. temperierte Raumbereiche in dem Innenvolumen der Temperierkammer einstellbar sind. Benachbarte Raumbereiche können durch gezielte Temperierung der entsprechenden Temperaturbereiche des Gehäuses oder mittels direkten Einströmens eines temperierten Fluids in die entsprechenden Raumbereichen eingestellt werden. Die Raumbereiche können nach Bedarf beispielsweise dieselbe Temperatur oder entsprechend unterschiedliche Temperaturen aufweisen.

Als passive Temperiereinrichtungen können Isoliereinrichtungen, wie beispielsweise Dämmmatten oder Hohlräume zur Dämmung, vorgesehen werden, um die Temperierkammer mit guten Dämm- und Temperiereigenschaften auszubilden.

Die Temperiereinrichtung als aktive Temperiereinrichtung weist beispielsweise Heizvorrichtungen und/oder Kühlvorrichtungen auf, um in dem Innenvolumen und insbesondere in einzelnen Raumbereichen des Innenvolumens gewünschte Temperaturen einzustellen. Mittels der Temperiereinrichtung ist die Temperierkammer heizbar und/oder kühlbar. Damit kann das Metallbauteil, welches in dem Innenvolumen der Temperierkammer an einer vorgesehen Position angeordnet ist, auf einer gewünschten Temperatur, insbesondere isotherm, gehalten werden. Ferner ist in der Temperierkammer ein gewünschtes Abkühlen des Metallbauteils mittels Vorgabe einer entsprechenden Temperatur in den Temperaturzonen bzw. den Raumbereichen der Temperierkammer möglich. Somit kann ein gewünschtes Temperaturprofil, bzw. ein Abkühlprofil, des Metallbauteils in der Temperierkammer, insbesondere in einem Raumbereich des Innenvolumens der Temperierkammer, vorgegeben werden. Aufgrund der Temperierung der verschiedenen Raumbereiche können bestimmte Bereiche des Metallbauteils mit unterschiedlichen ortsabhängigen Temperaturprofilen beaufschlagt werden. Mit anderen Worten kann ein erster Bereich des Metallbauteils, welcher sich in einem ersten Raumbereich der Temperierkammer befindet, mit einem ersten Temperaturprofil beaufschlagt werden und ein zweiter Bereich des Metallbauteils, welcher sich in einem zweiten Raumbereich der Temperierkammer befindet, mit einem zweiten Temperaturprofil beaufschlagt werden. Zudem kann die aktive Temperiereinrichtung Temperierelemente (z.B. die oben beschriebenen Isoliereinrichtungen) der passiven Temperiereinrichtung aufweisen.

Ein Temperaturprofil (z.B. Abkühlprofil) beschreibt einen Temperaturverlauf (z.B. eines Bereichs) des Metallbauteils entlang eines bestimmten zeitlichen Verlaufs (Temperatur/Zeit). Ein Temperaturprofil kann auch einen Zeitbereich mit einer konstanten Temperatur (sog. isothermes Halten) oder einen Zeitbereich mit einer ansteigenden Temperatur aufweisen. Während der Abkühlung des Metallbauteils stellen sich abhängig von der Temperatur und der Abkühlgeschwindigkeit verschiedene Gefügeanteile im Metallbauteil ein, welche die Duktilität des fertigen Metallbauteils wesentlich beeinflussen. Beispielsweise ist ein Metallbauteil mit einem hohen Martensitanteil weniger duktil als ein Metallbauteil mit einem hohen Perlitanteil.

Die Temperatur in dem Innenvolumen der Temperierkammer kann beispielsweise zwischen ungefähr 100° C bis ungefähr 800° C eingestellt werden. Bei einer gleichmäßigen Beheizung des Metallbauteils in der Temperierkammer, kann eine Temperatur in dem Innenvolumen der Temperierkammer zwischen ca. 930° C und 980° C nahezu konstant gehalten werden. Mittels der Temperierung der Temperierkammer können Bereiche des Metallbauteils beispielsweise mit einem Temperaturprofil beaufschlagt werden, bei welchem das Metallbauteil mit Geschwindigkeiten von ungefähr 3 K/s bis ungefähr 20 K/s abgekühlt oder erwärmt werden kann. Insbesondere bei einer Erwärmung des Metallbauteils kann die Erwärmungsgeschwindigkeit von ungefähr 1 K/s bis ungefähr 20 K/s betragen. Mittels der Temperierung der Temperierkammer können Bereiche des Metallbauteils beispielsweise auch abgeschreckt werden, d.h. dass Abkühlgeschwindigkeit von ungefähr 40 K/s bis ungefähr 200 K/s erzielbar sind.

Welche Gefüge sich im Metallbauteil während des Erwärmens, Haltens oder Abkühlens einstellen, kann aus einem Zeit-Temperatur-Umwandlungsschaubild (ZTU-Diagramm) entnommen werden. In einem ZTU-Diagramm kann die Gefügeentwicklung bei unterschiedlichen Temperaturverläufen bzw. Abkühlgeschwindigkeiten während des Abkühlens abgelesen werden.

Während des Abkühlens wird somit ein gewünschtes Gefüge (z.B. Martensit, Bainit, Ferrit oder Perlit) oder ein Mischgefüge aus mehreren Gefügeanteilen in dem Metallbauteil gebildet. Anschließend wird das Metallbauteil zur Verfestigung des gewünschten Gefüges oder Mischgefüges zügig abgekühlt (bzw. abgeschreckt), um beispielsweise das gewünschte Gefüge im Metallbauteil auch bei Raumtemperatur vorzufinden.

Das Metallbauteil wird in der Temperierkammer entsprechend eines vorbestimmten Temperaturprofils temperiert. Beispielsweise wird das Metallbauteil bzw. ein gewünschter Bereich des Metallbauteils auf eine vorbestimmte Temperatur zwischengekühlt und bis zum Erreichen der Abgabeposition beispielsweise isotherm gehalten. Ebenfalls kann die Temperiereinrichtung eine ausreichende Kühlleistung aufweisen, um ein Abschrecken des Metallbauteils in der Temperierkammer zu ermöglichen. Das Abschrecken beschreibt beispielsweise ein Kühlen des Metallbauteils mit einer Abkühlgeschwindigkeit von ungefähr 40 K/s bis ungefähr 200 K/s.

Aufgrund der Halterung des Metallbauteils in einer vorbestimmten Position in dem Innenvolumen der Temperierkammer, können durch gezielte Steuerung der Temperatur in den Raumbereichen des Innenvolumens der Temperierkammer gewünschte Bereiche des Metallbauteils gezielt temperiert werden. So können beispielsweise in der Temperierkammer erste Bereiche des Metallbauteils mit einem ersten Temperaturprofil und zweite Bereiche mit einem zweiten Temperaturprofil beaufschlagt werden. Beispielsweise kann ein erster Bereich des Temperaturprofils auf einer bestimmten Temperatur gehalten werden, während andere zweite Bereiche des Metallbauteils abgekühlt oder abgeschreckt werden.

Die Fördereinrichtung zum Befördern des Metallbauteils kann ortsfest angeordnet werden oder zusammen mit der Temperierkammer beweglich zwischen der Aufnahmeposition und der Abgabeposition angeordnet werden. Die Fördereinrichtung kann an der Temperierkammer direkt angeordnet sein oder an einem externen Gerüst bestehend aus Metallträgern verschiebbar angeordnet sein. Die Fördereinrichtung fährt in der Aufnahmeposition in die Ofeneinrichtung hinein und befördert das Metallbauteil aus der Ofeneinrichtung in die Temperierkammer. Dabei kann die Fördereinrichtung beispielsweise unter das Metallbauteil fahren und das Metallbauteil anschließend anheben. Entsprechend liegt das Metallbauteil dann auf der Fördereinrichtung auf. Zusätzlich oder alternativ kann die Fördereinrichtung Greifelemente aufweisen, welche aktiv das Metallbauteil im Ofen greifen und auf der Fördereinrichtung befestigen.

In der Temperierkammer kann die Fördereinrichtung das Metallbauteil ablegen und anschließend erst wieder in der Abgabeposition aufnehmen und befördern. Alternativ wird das Metallbauteil permanent mittels der Fördereinrichtung in der Temperierkammer gehalten, so dass die Fördereinrichtung in der Aufnahmeposition einmalig das Metallbauteil greift und erst wieder an der Abgabeposition freigibt.

Die Fördereinrichtung ist insbesondere ein asynchroner Förderer, welcher das Metallbauteil in der Aufnahmeposition von der Ofeneinrichtung in die Kammer bewegt, anschließend während des Verfahrens der Kammer von der Aufnahmeposition in die Abgabeposition in der Temperierkammer hält und in der Abgabeposition das Metallbauteil von der Kammer zu der Weiterverarbeitungseinrichtung befördert.

Die Fördereinrichtung kann beispielsweise eine Fördergabel bzw. eine Chargiergabel aufweisen, welche mehrere z.B. parallele Auflagestäbe oder ein Auflagegitter aufweist, auf welchen das Metallbauteil zur Beförderung auflegbar ist. Die Fördereinrichtung kann ferner ein Förderband und eine Förderkette aufweisen, um beispielsweise die Fördergabel oder sonstige Auflagevorrichtungen, auf welcher das Metallbauteil aufliegt, entsprechend anzutreiben. Ferner kann die Fördereinrichtung zum aktiven Greifen des Metallbauteils einen Förderroboter mit einem Greifarm aufweisen. Der Greifarm kann beispielsweise Klemmvorrichtungen oder Saugnäpfe aufweisen, um das Metallbauteil aufzunehmen.

Mit der beschriebenen Handhabungseinrichtung wird eine effiziente Herstellung für ein Metallbauteil mit bestimmten Gefügebereichen und entsprechend duktilen Eigenschaften ermöglicht. Die Wegstrecke zwischen der Ofeneinrichtung und der Weiterverarbeitungseinrichtung, z.B. der weiterverarbeitenden Werkzeugeinrichtung, wird mittels der Handhabungseinrichtung überbrückt. Mittels der temperierten Temperierkammer wird während dem Überführen des Metallbauteils von dem Ofen zu der Weiterverarbeitungseinrichtung ein gewünschtes Temperaturprofil auf entsprechende Bereiche des Metallbauteils beaufschlagt.

Bei herkömmlichen Herstellverfahren kommt es bei der Überführung des Metallbauteils von dem Ofen zu der Weiterverarbeitungseinrichtung zu einer undefinierten und unkontrollierbaren Abweichung der Temperatur, wodurch ein undefiniertes und unkontrollierbares Gefüge in dem fertigen Metallbauteil verursacht wird. Mit der erfindungsgemäßen Handhabungseinrichtung wird eine kontrolliert temperierte Umgebung des Metallbauteils während der Überführung des Metallbauteils von der Ofeneinrichtung zu der Weiterverarbeitungseinrichtung geschaffen. Zudem wird während des Beförderns zwischen der Ofeneinrichtung und der Weiterverarbeitungseinrichtung bereits ein gewünschtes Temperaturprofil auf das Metallbauteil beaufschlagt, d.h. das Metallbauteil erfährt eine gewünschte Abkühlung oder ein isothermes Halten. Darüber hinaus kann das Innenvolumen der Temperierkammer mittels der Temperiereinrichtung in (z.B. unterschiedlich) tempereierte Raumbereiche eingeteilt werden, so dass verschiedene Bereiche des Metallbauteils während des Beförderns mit der Temperierkammer unterschiedlich erwärmt, isotherm gehalten oder abgekühlt werden, d.h. mit gewünschten Temperaturprofilen beaufschlagt werden. Somit können gewünschte Gefügeeigenschaften in dem Metallbauteil bereits während des Transportierens in der Temperierkammer eingestellt werden.

Gemäß einer weiteren beispielhaften Ausführungsform ist die Verfahreinrichtung derart eingerichtet, dass die Temperierkammer zwischen einer Mehrzahl von beabstandeten Aufnahmepositionen, in welchen das Metallbauteil aus der Ofeneinrichtung in die Temperierkammer beförderbar ist, und der Abgabeposition verfahrbar ist. Mittels der beispielhaften Ausführungsform kann die Temperierkammer sozusagen Metallbauteile aus verschiedenen beabstandeten Ofenebenen entnehmen und einer gemeinsamen Weiterverarbeitungseinrichtung bzw. einer gemeinsamen Abgabeposition abgeben.

Alternativ kann die Temperierkammer auch derart angeordnet sein, dass diese neben einer Ansteuerung einer Vielzahl von weiteren beabstandeten Aufnahmepositionen auch eine Vielzahl von weiteren Abgabepositionen, zum Beispiel unterschiedlicher Weiterverarbeitungseinrichtungen, mittels der Verfahreinrichtung verfahrbar ist.

Die Temperierkammer ist insbesondere horizontal zwischen der Ofeneinrichtung und der Weiterverarbeitungseinrichtung und/oder vertikal bzw. auf und ab zwischen der Ofeneinrichtung und der Weiterverarbeitungseinrichtung verfahrbar.

Gemäß einer beispielhaften Ausführungsform weist die Temperierkammer zumindest eine Öffnung auf, durch welche das Metallbauteil in die Temperierkammer einlegbar ist. Die Temperierkammer kann ferner eine Schließeinrichtung (bewegliche Klappe, Schieber oder Tür) aufweisen, mittels welcher die Öffnung selektiv verschließbar ist. Aufgrund der Schließeinrichtung kann das Innenvolumen während des Verfahrens der Kammer zwischen der Aufnahmeposition und der Abgabeposition das Innenvolumen isoliert werden. Dadurch kann effektiver und exakter die Temperierkammer temperiert werden. In der Aufnahmeposition und der Abgabeposition öffnet die Schließeinrichtung die Öffnung, so dass das Metallbauteil in die Temperierkammer befördert oder aus der Temperierkammer herausgenommen werden kann. Entsprechend kann eine weitere Öffnung in der Temperierkammer angeordnet sein, um in der Aufnahmeposition das Metallbauteil aufzunehmen und eine weitere Öffnung angeordnet sein, in welcher das Metallbauteil aus der Temperierkammer herausnehmbar ist. Die weitere Öffnung kann entsprechend mittels einer weiteren Schließeinrichtung verschließbar sein.

Die (weitere) Schließeinrichtung kann entsprechende Klappen oder Schließelemente aufweisen, um die Öffnung oder die weitere Öffnung wahlweise zu öffnen oder zu schließen.

Ferner kann die Schließeinrichtung als Hubeinrichtung und das Gehäuse zwei- oder mehrteilig ausgebildet sein. Beispielsweise kann das Gehäuse aus einer Gehäuseober- und -unterschale bestehen, wobei die Hubeinrichtung eingerichtet ist, die Gehäuseober- und -unterschale zueinander in eine Schließstellung oder voneinander in eine Öffnungstellung zu bewegen. In der Öffnungstellung ist das Innenvolumen der Temperierkammer zugänglich, sodass die Fördereinrichtung das Bauteil hinein oder hinaus befördern kann. In der Schließstellung bilden die Gehäuseschalen ein geschlossenes und isoliertes Gehäuse.

Gemäß einer weiteren beispielhaften Ausführungsform weist die Verfahreinrichtung eine Antriebseinrichtung zum Verfahren der Temperierkammer auf. Die Verfahreinrichtung weist z.B. einen Riemenantrieb, einen Kettenantrieb, einen hydraulischen Antrieb, einen elektrischen Antrieb und/oder einen Linearmotor auf.

Gemäß einer weiteren beispielhaften Ausführungsform ist die Temperiereinrichtung derart ausgebildet, dass in der Temperierkammer Raumbereiche einstellbar temperierbar sind, um in der Temperierkammer das Metallbauteil mit einem ortsabhängigen Temperaturprofil zu beaufschlagen.

Beispielsweise ist die Temperiereinrichtung derart ausgebildet, dass mittels Führens eines Fluids mit einer vorbestimmten Temperatur in zumindest einem der Raumbereiche die Temperatur des Metallbauteils in dem jeweiligen Raumabschnitt einstellbar ist. Beispielsweise ist das Fluid mit einer vorbestimmten Temperatur in zumindest einem der Raumbereiche des Innenvolumens einströmbar. Das Fluid kann beispielsweise ein temperiertes Gas, ein Dampf oder eine Flüssigkeit sein. Ferner kann zur effektiven Temperierung das Fluid bedruckt eingeströmt werden. Mit anderen Worten kann die Temperiereinrichtung beispielsweise Druckluft bzw. ein sauerstofffreies (Schutz-)Gas mit einer gewünschten Temperatur in vordefinierte Raumbereiche des Innenvolumens der Temperierkammer einströmen. Somit werden die Raumbereiche mit einer vorbestimmten Temperatur eingestellt.

Hierzu können an der Innenwandung des Gehäuses der Temperierkammer (Gas-)Düsen angeordnet werden, welche selektiv ansteuerbar sind, um entsprechend temperiertes Fluid einzuströmen. Darüber hinaus können an der Innenwandung Gebläseöffnungen angeordnet sein, so dass ein Gebläse einen entsprechenden Volumenstrom an entsprechend temperiertem Fluid in entsprechende Raumbereiche des Innenvolumens einströmt.

Zur effektiveren Umsetzung der oben beschriebenen Temperiereinrichtung weist die Temperiereinrichtung ein Umwälzsystem auf. Das Umwälzsystem weist Absaugdüsen bzw. Absaugöffnungen in der Innenwandung der Kammer auf. Das Fluid, welches mit einer vorbestimmten Temperatur in bestimmte Raumbereiche der Temperierkammer eingeströmt wurde, kann entsprechend durch die Absaugdüsen bzw. Absaugöffnungen abgesaugt werden. Anschließend kann das abgesaugte Fluid erneut temperiert werden und zur Temperierung der Raumbereiche in das Innenvolumen eingeströmt werden.

Gemäß einer weiteren beispielhaften Ausführungsform ist die Temperiereinrichtung derart eingerichtet, dass das Gehäuse oder ein Gehäuseabschnitt der Temperierkammer auf eine vorbestimmte Temperatur erwärmbar ist oder sind, so dass in der Temperierkammer das Metallbauteil oder ein Bereich des Metallbauteils mit einem ortsabhängigen Temperaturprofil beaufschlagbar ist oder sind. Insbesondere ist die Innenwand des Gehäuses mit einer vorbestimmten Temperatur erwärmbar, so dass in den Raumbereichen des Innenvolumens die gewünschten Raumbereiche entsprechend temperierbar sind. Insbesondere können bestimmte Bereiche der Innenwand unterschiedlich erwärmt werden.

Beispielsweise weist die Temperiereinrichtung zumindest einen Fluidkanal auf, durch welchen das Fluid geführt ist. Insbesondere kann an einer zum Innenvolumen gerichteten Innenseite oder einer abgewandten Außenseite des Gehäuses ein Fluidkanal verlaufen, in welchem ein Fluid (zum Beispiel ein temperiertes Gas oder eine Flüssigkeit) mit einer bestimmten Temperatur einleitbar ist, um die Bereiche der Innenwand und somit die Raumbereiche des Innenvolumens einzustellen. Der Fluidkanal kann ferner mäanderförmig entlang des Gehäuses verlaufen. Der Fluidkanal kann verschiedene Kanalzweige aufweisen, welche entlang dem Gehäuse verlaufen. Jeder Kanalzweig kann z.B. mittels der Steuereinheit selektiv angesteuert werden und mit dem Fluid, welches eine bestimmte Temperatur aufweist, durchströmt werden. Die Kanalzweige decken somit Bereiche des Gehäuses ab, wobei diese Bereiche gezielt erwärmt werden können. Diese Bereiche des Gehäuses temperieren dann die entsprechenden Raumbereiche des Innenvolumens mittels Strahlungswärme bzw. -kälte.

Alternativ oder zusätzlich zu der Ausbildung des Fluidkanals und seiner Kanalzweige kann die Temperatureinrichtung ein elektrisches Heizelement aufweisen. Das elektrische Heizelement ist derart steuerbar, dass ein Gehäuse oder ein Gehäuseabschnitt mit einer vorbestimmten Temperatur erwärmbar ist, sodass sich in der Temperierkammer das Metallbauteil mit einem ortsabhängigen Temperaturprofil beaufschlagbar ist. Das Heizelement ist beispielsweise ein Wärmestrahler, wie beispielsweise ein Infrarotstrahler, und kann entlang der Innenwand des Gehäuses angeordnet sein und die Bereiche des Gehäuses gezielt erwärmen.

Ferner kann das Gehäuse innenseitig in Richtung Innenvolumen mit einem beheizbaren Keramikelement bzw. einer Keramikbeschichtung abgedeckt werden, um somit mittels des beheizbaren (z.B. glühenden) Keramikelements oder mittels des gekühlten Keramikelements eine Strahlungsheizung bzw. eine Strahlungskühlung zu ermöglichen.

Gemäß er Erfindung ist die Fördereinrichtung mit der Temperierkammer derart gekoppelt, dass die Fördereinrichtung in die Temperierkammer ein- und ausfahrbar ist. Zudem kann die die Fördereinrichtung während des Verfahrens der Temperierkammer zwischen der Aufnahmeposition und der Abgabeposition in der Temperierkammer verharren bzw. bleiben. Befindet sich die Fördereinrichtung bzw. der Teil der Fördereinrichtung, welcher das Metallbauteil z.B. trägt oder greift, in dem Innenvolumen, so wird die Fördereinrichtung auf eine gewünschte Temperatur erwärmt und gehalten. In dem Kontaktbereich der Fördereinrichtung mit dem Metallbauteil in der Aufnahmeposition besteht somit kein Temperaturunterschied bzw. nur ein geringer Temperaturunterschied zwischen der Fördereinrichtung und dem Metallbauteil. Somit wird das Metallbauteil schonend durch die Fördereinrichtung aufgenommen, ohne dass es zu einem starken Abkühlen oder Erwärmen des Metallbauteils in dem Kontaktbereich mit der Fördereinrichtung beim Aufnehmen des Metallbauteils kommt. Damit werden thermische Spannungen im Bauteil während des Aufnehmens des Metallbauteils durch die Fördereinrichtung reduziert.

Die Fördereinrichtung wird beispielsweise in der Temperierkammer mittels der Temperiereinrichtung auf eine gewünschte Temperatur vorgewärmt werden, bevor die Fördereinrichtung das Metallbauteil in der Aufnahmeposition aufnimmt. Wird beispielsweise die Fördereinrichtung gezielt vorgekühlt, so kann bei Aufnahme der Fördereinrichtung mit dem Metallbauteil ein gezieltes Abkühlen bzw. Abschrecken des Bereichs des Metallbauteils erzeugt werden, welcher im Kontakt mit der Fördereinrichtung steht.

Gemäß einer weiteren beispielhaften Ausführungsform ist die Temperierkammer derart ausgebildet, dass das Metallbauteil kontaktfrei bzw. nahezu kontaktfrei mit dem Gehäuse und dessen Innenwandung ist, wenn sich das Metallbauteil in dem Innenvolumen der Temperierkammer befindet.

Beispielsweise können bestimmte Halteelemente zum Halten des Metallbauteils in der Temperierkammer angeordnet sein, um einen Abstand zwischen der Innenwandung des Gehäuses und dem Metallbauteil herzustellen. Ferner kann die Fördereinrichtung als Halteelement in der Temperierkammer ausgebildet sein, um das Metallbauteil kontaktfrei zu der Innenwandung zu halten. Somit bildet sich ein Luftpolster in einem Spalt zwischen der Innenwandung und dem Metallbauteil aus. Das Luftpolster kann sich positiv auf die Dämmeigenschaften der Temperierkammer auswirken.

In einer weiteren beispielhaften Ausführungsform ist die Temperierkammer derart ausgebildet, dass das Metallbauteil die Innenwandung des Gehäuses der Temperierkammer zumindest bereichsweise berührt, wenn sich das Metallbauteil in dem Innenvolumen der Temperierkammer befindet. In den Berührbereichen zwischen der Innenwandung und den Bereichen des Metallbauteils kann effektiver und schneller eine gewünschte Temperatur des Bereichs des Metallbauteils eingestellt werden. Beispielsweise kann durch direkten Kontakt der Bereiche der Innenwandung mit Bereichen des Metallbauteils ein Abschrecken dieser Bereiche ermöglicht werden. Beispielsweise können die Bereiche der Innenwandung gekühlt werden, so dass ein schnelles Abschrecken der in Kontakt stehenden Bereiche des Metallbauteils ermöglicht wird. Beispielsweise kann ebenfalls das gesamte Metallbauteil mit der Innenwand in Kontakt stehen, so dass das gesamte Metallbauteil oder Bereiche des Metallbauteils effektiv und schnell auf eine gewünschte Temperatur gebracht werden kann.

Gemäß einer weiteren beispielhaften Ausführungsform weist die Handhabungseinrichtung eine Steuereinheit auf, welche die Temperierkammer, die Verfahreinrichtung und/oder die Fördereinrichtung derart steuert, dass die folgende Prozedur zur Handhabung des Metallbauteils ausführbar ist:
- Verfahren der Temperierkammer in die Aufnahmeposition, in welcher das Metallbauteil aus der Ofeneinrichtung in die Temperierkammer aufnehmbar ist,
- Befördern des Metallbauteils von der Ofeneinrichtung in die Temperierkammer mittels der Fördereinrichtung,
- Verfahren der Temperierkammer in die Abgabeposition, in welcher das Metallbauteil von der Temperierkammer an die Weiterverarbeitungseinrichtung abgebbar ist,
- Temperieren des Metallbauteils mittels einer Temperiereinrichtung der Temperierkammer, und
- Befördern des Metallbauteils von der Temperierkammer zu der Abgabeposition mittels der Fördereinrichtung.

Die Steuereinheit kann beispielsweise einen programmierbaren Prozess aufweisen. Ferner kann die Steuereinheit eine Datenbank aufweisen, in welcher beispielsweise die gewünschten Temperaturen für die gewünschten Raumbereiche des Innenvolumens gespeichert sind und welche von dem Prozessor abgerufen werden können. Ferner können in der Datenbank als Parameter beispielsweise die Steuerkoordinaten der Temperierkammer, der Temperiereinrichtung, der Verfahreinrichtung und der Fördereinrichtung gespeichert sein. Ferner können die entsprechenden Koordinaten der Ofeneinrichtung, insbesondere der einzelnen Ofenebenen, abgespeichert sein sowie die entsprechenden Aufnahmepositionen und Abgabepositionen. Ferner können in der Datenbank bestimmte Parameter zur Identifikation bestimmter Metallbauteile abgespeichert sein. Beispielsweise können Parameter der Geometrie sowie der Stoffzusammensetzung verschiedener Metallbauteile abgespeichert sein. Der Benutzer kann beispielsweise die Form, das Material und die gewünschte Duktilität des Metallbauteils eingeben, worauf daraufhin der Prozessor entsprechende Prozessparameter (Temperatur, Abkühlzeiten bzw. Temperaturprofile, Bewegungskoordinaten für die Temperierkammer und für die Fördereinrichtung sowie entsprechende Positionen für die Aufnahmepositionen und Abgabepositionen) aufruft, worauf die Handhabungseinrichtung von der Steuereinheit entsprechend gesteuert wird. Die Steuereinheit kann zusätzlich ebenfalls die Ofeneinrichtung steuern, so dass in den entsprechenden Ofenebenen eine gewünschte Temperatur vorliegt.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine Temperierungsvorrichtung gemäß einer beispielhaften Ausführungsform der vorliegenden Erfindung,
Fig. 2 zeigt eine perspektivische Ansicht einer Temperierungsvorrichtung gemäß einer beispielhaften Ausführungsform der vorliegenden Erfindung, und
Fig. 3 bis Fig. 5 zeigen schematisch eine Temperierkammer mit beispielhaften Ausführungen der Temperiereinrichtung.

### Detaillierte Beschreibung von exemplarischen Ausführungsformen

Gleiche oder ähnliche Komponenten in den Figuren sind mit gleichen Bezugsziffern versehen. Die Darstellungen in den Figuren sind schematisch.

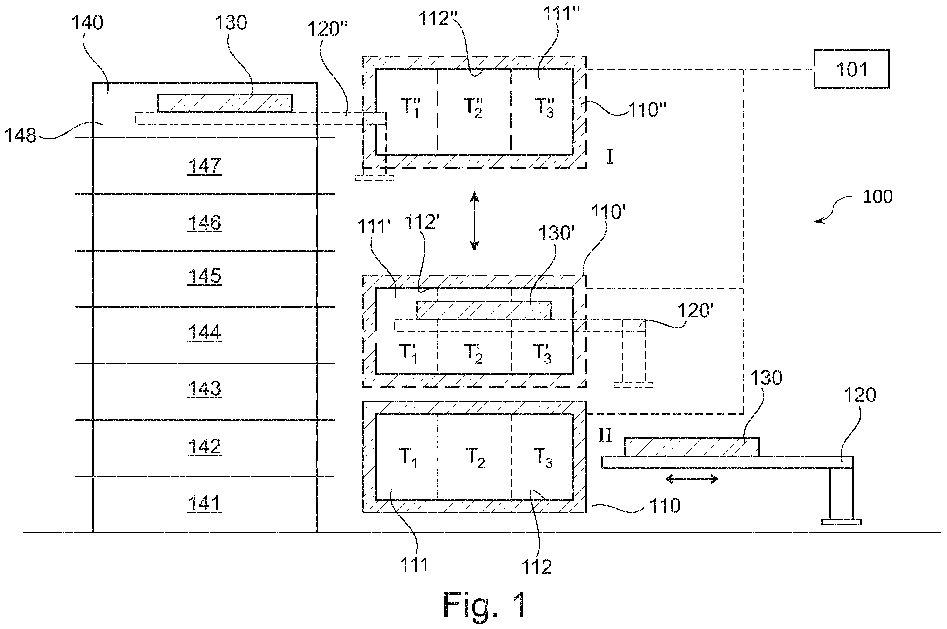

**Fig. 1** zeigt eine Temperierungsvorrichtung zum Temperieren eines Metallbauteils 130. Die Temperierungsvorrichtung weist eine Ofeneinrichtung 140 zum Erwärmen des Metallbauteils 130 und eine Handhabungseinrichtung 100 zum Handhaben des Metallbauteils 130 zwischen der Ofeneinrichtung 140 und einer Weiterverarbeitungseinrichtung auf. Die Ofeneinrichtung 140 weist, wie in Fig. 1 dargestellt, beispielsweise acht Ofenmodule 141 bis 148 auf. Die Ofenmodule 141 bis 148 sind beabstandet zueinander, beispielsweise übereinander, angeordnet. In jedem Ofenmodul 141 bis 148 kann ein entsprechendes Metallbauteil 130 auf eine gewünschte Temperatur, beispielsweise auf eine Austenitisierungstemperatur von mehr als z.B. 750° C, vorgewärmt werden.

Die Handhabungseinrichtung 100 weist eine Temperierkammer 110 auf, in welcher das Metallbauteil 130 einlegbar bzw. einführbar ist. Die Temperierkammer 110 weist eine Temperiereinrichtung auf, welche eine Temperatur in der Temperierkammer 110 einstellen kann. In Fig. 1 ist die Temperierkammer 110 in einer Aufnahmeposition I, in einer Zwischenposition und in einer Abgabeposition II dargestellt. Wie in Fig. 1 beispielhaft dargestellt, ist die Temperierkammer 110 insbesondere vertikal bzw. auf und ab verfahrbar.

In der Aufnahmeposition I ist das Metallbauteil 130 aus der Ofeneinrichtung 140 (bzw. aus einer der Ofenmodule 141 bis 148) beförderbar und in der Abgabeposition II ist das Metallbauteil 130 von der Temperierkammer 110 an die Weiterverarbeitungsrichtung (z.B. Ablagetisch oder Umformwerkzeug) beförderbar.

Zur Beförderung des Metallbauteils 130 weist die Handhabungseinrichtung 100 eine Fördereinrichtung 120 auf, welche derart eingerichtet ist, dass das Metallbauteil 130 in der Aufnahmeposition I der Temperierkammer 110 zwischen der Ofeneinrichtung 140 und der Temperierkammer 110 beförderbar ist und dass das Metallbauteil 130 in der Abgabeposition II zwischen der Temperierkammer 110 und der Abgabeposition beförderbar ist.

Die Temperierkammer 110 weist beispielsweise ein Gehäuse mit einer Innenwand 112 auf, welche ein Innenvolumen 111 ausbildet. In das Innenvolumen 111 ist das Metallbauteil 130 einlegbar. Die Temperiereinrichtung ist ferner derart ausgebildet, dass in dem Innenvolumen 111 mehrere Raumbereiche T1, T2, T3 gezielt temperierbar sind. Die Temperiereinrichtung kann beispielsweise ein elektrisches Heizelement oder ein fluidgekühltes Temperierelement aufweisen (zum Beispiel einen Fluidkanal), welche entlang der Innenwand 112 verlaufend angeordnet sind. Ferner können die Raumbereiche T1, T2, T3 durch Einblasen eines entsprechend temperierten Fluids in das Innenvolumen 111 bzw. in einem der Raumbereiche T1, T2, T3 eingestellt werden.

In Fig. 1 sind die Ofenmodule 141 bis 148 der Ofeneinrichtung 140 übereinander angeordnet. Entsprechend kann eine Verfahreinrichtung die Temperierkammer 110 vertikal bzw. auf und ab verfahren, um jede der Ofenmodule141 bis 148 zu erreichen.

Ist die Temperierkammer 110 in der Aufnahmeposition I an einem gewünschten Ofenmodul 141 bis 148 angekommen, fährt die Fördereinrichtung 120 in das entsprechende Ofenmodul 141 bis 148 hinein, um das dort erwärmte Metallbauteil 130 aufzunehmen. Anschließend fährt die Fördereinrichtung 120 in das Innenvolumen 111 der Temperierkammer 110. In einem nächsten Schritt wird die Temperierkammer 110 von der Aufnahmeposition I entsprechend zu der Abgabeposition II mittels der Verfahreinrichtung verfahren.

Während des Verfahrens der Temperierkammer 110 kann die Fördereinrichtung 120 in dem Innenvolumen 111 positioniert werden, um diese entsprechend zu temperieren. Die Fördereinrichtung 120 weist somit dieselbe Temperatur wie die Temperatur im Innenvolumen 111 und entsprechend wie das gehaltene Metallbauteil 130 auf. De Fördereinrichtung 120 kann das Metallbauteil 130 in einer gewünschten Position im Innenvolumen 111 während des Verfahrens der Temperierkammer 110 halten. Alternativ kann die Fördereinrichtung 120 das Metallbauteil 130 an eine Halteeinrichtung, welche in dem Innenvolumen 111 angeordnet ist, übergeben. Ferner kann eine Fördereinrichtung 120 an der Aufnahmeposition I angeordnet sein, um das Metallbauteil 130 in die Temperierkammer 110 zu befördern, und eine weitere Fördereinrichtung 120 an der Abgabeposition II angeordnet sein, um das Metallbauteil 130 zu der Weiterverarbeitungseinrichtung zu befördern.

Wenn die Temperierkammer 110 an der Abgabeposition II angekommen ist, befördert die Fördereinrichtung 120 das Metallbauteil 130 aus dem Innenvolumen 111 heraus. An der Abgabeposition II kann das Metallbauteil 130 mit einer gewünschten Temperatur an die Weiterverarbeitungseinrichtung, wie beispielsweise einer Presshärtevorrichtung, zur weiteren Bearbeitung abgegeben werden.

Die Fördereinrichtung 120, die Temperierkammer 110 und gegebenenfalls die Ofeneinrichtung 140 können durch eine Steuereinheit 101 gesteuert werden.

Insbesondere wird die Temperiereinrichtung derart gesteuert, dass in der Temperierkammer 110 das Innenvolumen 111 bzw. die temperierten Raumbereiche T1, T2, T3 einstellbar temperierbar sind, um in der Temperierkammer 110 das Metallbauteil 130 mit einem ortsabhängigen Temperaturprofil zu beaufschlagen.

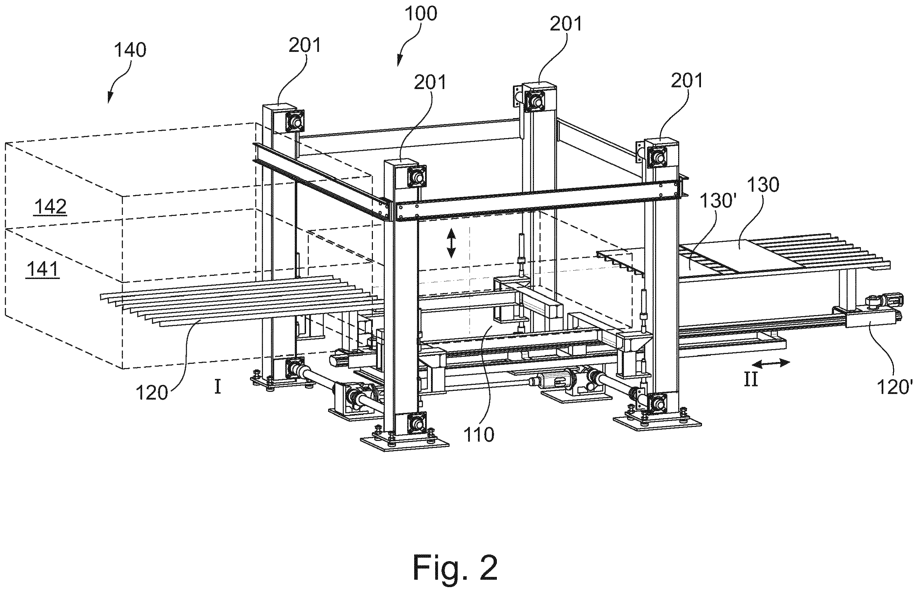

**Fig. 2** zeigt eine perspektivische Darstellung der Temperierungsvorrichtung aus Fig. 1. In der Ofeneinrichtung 140 sind schematisch das erste Ofenmodul 141 und das zweite Ofenmodul 142 dargestellt.

Auf der linken Seite in Fig. 2 ist die Fördereinrichtung 120 dargestellt, um entsprechende Metallbauteile 130 aus dem ersten Ofenmodul 141 in die Temperierkammer 120 zu befördern. In der Abgabeposition II ist die Fördereinrichtung 120' aus der Temperierkammer 110 herausgefahren, um das Metallbauteil 130, 130' zu der Weiterverarbeitungseinrichtung zu befördern (siehe rechte Seite in Fig. 2).

Die Fördereinrichtung 120 weist, wie in Fig. 2 dargestellt, beispielsweise ein Trägerplateau bestehend aus z.B. parallelen Stäben bzw. aus Förder- bzw. Chargiergabeln auf, auf welchen die entsprechenden Metallbauteile 130 auflegbar sind.

Um das Metallbauteil 130 aus einem entsprechenden Ofenmodul 141, 142 aufzunehmen, kann beispielsweise jedes Ofenmodul 141, 142 eine Auflagefläche aufweisen, auf welcher das Metallbauteil 130 aufliegt. Die Auflagefläche kann ferner Rillen bzw. Nuten aufweisen, in welchen die Chargiergabeln (bzw. die parallel Stäbe) der Fördereinrichtung 120 einfahren können. Anschließend kann die Fördereinrichtung 120 und/oder die Temperierkammer 110 leicht vertikal nach oben verschoben werden, so dass die Chargiergabeln das Metallbauteil 130 von der Auflagefläche anheben. Anschließend können die Chargiergabeln der Fördereinrichtung 120 zusammen mit dem aufgenommenen Metallbauteil 130 in das Innenvolumen 111 der Temperierkammer 110 verfahren werden.

Im Anschluss verfährt die Temperierkammer 110 von der Aufnahmeposition I in die Abgabeposition II. In Fig. 2 ist ein Sonderfall dargestellt, in welchem die Aufnahmeposition I der Temperierkammer 110 der Abgabeposition II gleicht oder ähnelt.

Wie in Fig. 2 dargestellt, weist die Verfahreinrichtung z.B. ein verfahrbares Gestell auf, wobei die Temperierkammer 110 an dem Gestell befestigt ist. Die Verfahreinrichtung weist ferner eine Antriebseinheit und Metallträger 201 auf. Das Gestell kann mittels der Antriebseinheit entlang der Metallträger 201 z.B. vertikal bzw. auf und ab verfahren werden. Hierzu sind an den Metallträgern 201 beispielsweise Führungsschienen, welche das Gestell verfahrbar koppeln, angeordnet.

Befindet sich die Temperierkammer 110 in der gewünschten Abgabeposition II, können die Chargiergabeln der Fördereinrichtung 120 aus dem Innenvolumen 111 herausgefahren werden und das Metallbauteil 130 an eine Weiterverarbeitungseinrichtung abgegeben werden.

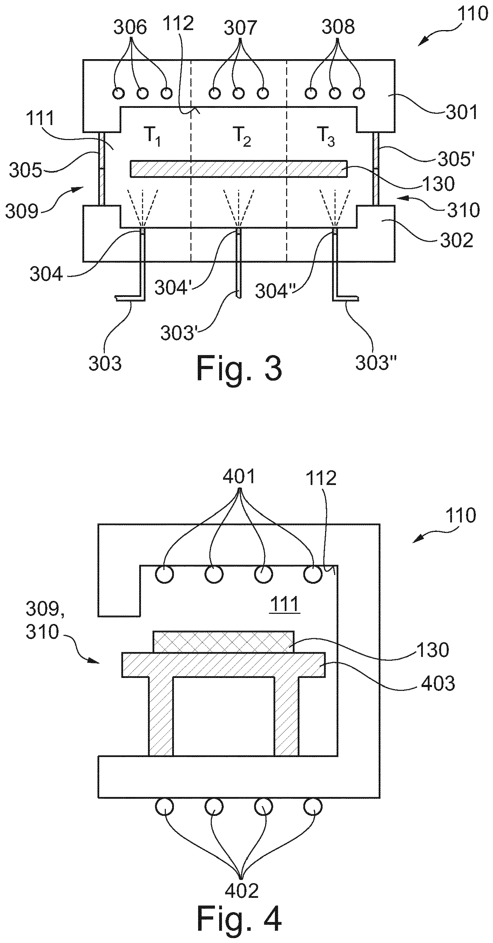

**Fig. 3** bis **Fig. 5** zeigen schematisch eine Temperierkammer 110 mit beispielhaften Ausführungen der Temperiereinrichtung.

Die Temperierkammer 110 kann beispielsweise aus einem monolithisch bzw. integral ausgebildeten Korpus oder, wie in Fig. 3 dargestellt, aus einer oberen Gehäuseschale 301 und einer unteren Gehäuseschale 302 bestehen. Die Temperierkammer 110 kann eine Öffnung zum Einbringen und Herausbefördern des Metallbauteils 130 aufweisen. Ferner kann die Temperierkammer 110, wie in Fig. 3 dargestellt, eine Eingangsöffnung 309 zum Einbringen des Metallbauteils 130 in das Innenvolumen 111 der Temperierkammer 110 und eine Ausgangsöffnung 310 zum Herausbefördern des Metallbauteils 130 aus dem Innenvolumen 110 aufweisen. An der entsprechenden Eingangsöffnung 309 und/oder der Ausgangsöffnung 310 kann entsprechend eine Schließeinrichtung 305, 305' angeordnet werden. Die Schließeinrichtung 305, 305' kann beispielsweise verschiebbare oder schwenkbare Türelemente aufweisen, welche sich gezielt öffnen und schließen, so dass einerseits eine Zugänglichkeit in das Innenvolumen 111 über die entsprechenden Öffnungen 309, 310 gegeben ist oder andererseits im geschlossenen Zustand der Öffnungen 309, 310 eine gute Isolierung des Innenvolumens 111 gegeben ist.

Zur gezielten Temperierung der verschiedenen Raumbereiche T1, T2, T3 in dem Innenvolumen 111 der Temperierkammer 110 kann beispielsweise, wie in der oberen Gehäuseschale 301 beispielhaft dargestellt, verschiedene Temperierleitungen 306, 307, 308 angeordnet sein. Die erste Temperierleitung 306 kann beispielsweise mit einem Fluid mit einer ersten Temperatur durchströmt werden, die zweite Temperierleitung 307 kann mit einem Fluid mit einer zweiten Temperatur durchströmt werden und die dritte Temperierleitung 308 kann mit einem Fluid mit einer dritten Temperatur durchströmt werden, so dass entsprechend die Temperaturen der Raumbereiche T1, T2, T3 über Strahlungswärme bzw. Strahlungskühlung eingestellt werden. Ferner können die Temperierleitungen 306, 307, 308 elektrische Heizleitungen darstellen, welche beispielsweise über eine Widerstandsheizung die Raumbereiche T1, T2, T3 entsprechend temperieren.

Wie in der unteren Gehäusehälfte 302 in Fig. 3 beispielhaft dargestellt, können verschiedene Fluidzuführungen 303, 303', 303" angeordnet werden, welche im Bereich der Innenwand 112 der Temperierkammer 110 entsprechende Düseneinrichtungen 304, 304', 304" aufweisen. In jeder der Fluidzuführungen 303, 303', 303" kann ein entsprechend temperiertes Fluid über die entsprechenden Düseneinrichtungen 304, 304', 304" in das Innenvolumen 101 bzw. in die entsprechenden Raumbereiche T1, T2, T3 eingeströmt werden, um entsprechende Temperaturzonen der Raumbereiche T1, T2, T3 einzustellen.

In Fig. 4 ist eine weitere beispielhafte Ausführungsform der Temperierkammer 110 dargestellt. Die Temperierkammer 110 in Fig. 4 ist beispielsweise aus einem Korpus hergestellt und weist eine Öffnung auf, welche als Eingangsöffnung 309 und Ausgangsöffnung 310 dient. In dem Innenvolumen 111 der Temperierkammer 110 kann beispielsweise eine Haltevorrichtung 403 angeordnet sein, auf welcher das Metallbauteil 130 platziert werden kann. Die Haltevorrichtung 403 kann ferner ein Teil der Fördereinrichtung 120 darstellen. Mit anderen Worten kann die Haltevorrichtung 403 beispielsweise in das Innenvolumen 111 hineinfahrbar oder hinausfahrbar sein.

In Fig. 4 sind beispielhaft eine vierte Temperierleitung 401 und eine fünfte Temperierleitung 402 dargestellt. Die Temperierleitungen 306, 307, 308 verlaufen beispielsweise innerhalb des Materials der Temperierkammer 110. In Fig. 4 verläuft hingegen die vierte Temperierleitung 401 entlang der Innenwandung 112 der Temperierkammer 110. Alternativ oder zusätzlich verläuft die fünfte Temperierleitung 402 entlang einer Außenfläche der Temperierkammer 110.

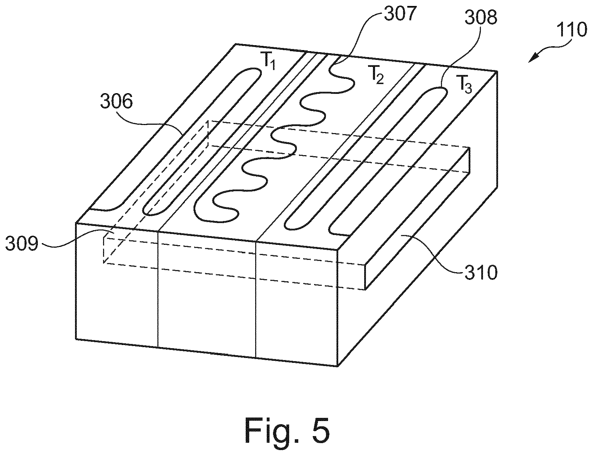

In Fig. 5 wird eine weitere beispielhafte Ausführungsform der Temperierkammer 110 dargestellt. Die Temperierkammer 110 in Fig. 5 weist einen geschlossenen Korpus auf, welches das Innenvolumen 111 umhüllt. Entsprechend ist das Innenvolumen 111 über die Eingangsöffnung 309 und die Ausgangsöffnung 310 zugänglich. Ferner sind in Fig. 5 die Raumbereiche T1, T2, T3 dargestellt, welche über die entsprechenden Temperierleitungen 306, 307, 308 temperiert werden können. In Fig. 5 sind beispielhafte Verläufe der entsprechenden Temperierleitungen 306, 307, 308 dargestellt. Beispielsweise verlaufen die entsprechenden Temperierleitungen 306, 307, 308 mäanderförmig entlang der Außenfläche, innerhalb des Materials der Temperierkammer 110 oder entlang der Innenwandung 112 der Temperierkammer 110.

Jeder der Temperierleitungen 306, 307, 308 kann mit einem entsprechend temperierten Fluid durchströmt werden. Die Temperierleitungen 306, 307, 308 weisen beispielsweise jeweils getrennte Fluidkreisläufe auf, so dass separate Fluide mit unterschiedlichen Temperaturen in die entsprechenden Temperierleitungen 306, 307, 308 einleitbar sind.

Ferner sei angemerkt, dass neben den in Fig. 3 bis Fig. 5 dargestellten temperierten Raumbereichen T1, T2, T3 nur ein Raumbereich oder eine beliebige Mehrzahl von unterschiedlichen Raumbereichen T1, T2, T3, Tn individuell beheizbar sind. Die Merkmale der einzelnen Ausführungsbeispiele der Temperierkammer 110 aus den Figuren 3, 4 und 5, insbesondere der Anordnung der Temperierleitungen 306, 307, 308, 401, 402 und der Öffnungen 309, 310, können miteinander kombiniert werden.

### Bezugszeichenliste:

- 100: Handhabungseinrichtung
- 101: Steuereinheit

- 110: Temperierkammer
- 111: Innenvolumen
- 112: Innenwandung

- 120: Fördereinrichtung

- 130: Metallbauteil

- 140: Ofeneinrichtung
- 141: erstes Ofenmodul
- 142: zweites Ofenmodul
- 143: drittes Ofenmodul
- 144: viertes Ofenmodul
- 145: fünftes Ofenmodul
- 146: sechstes Ofenmodul
- 147: siebtes Ofenmodul
- 148: achtes Ofenmodul

- 201: Metallträger

- 301: obere Gehäuseschale
- 302: untere Gehäuseschale
- 303: Fluidzufuhr
- 304: Düseneinrichtung
- 305: Schließeinrichtung

- 306: erste Temperierleitung
- 307: zweite Temperierleitung
- 308: dritte Temperierleitung

- 309: Eingangsöffnung
- 310: Ausgangsöffnung

- 401: vierte Temperierleitung
- 402: fünfte Temperierleitung
- 403: Haltevorrichtung

- T₁: erste Temperaturzone
- T₂: zweite Temperaturzone
- T₃: dritte Temperaturzone

- I: Aufnahmeposition
- II: Abgabeposition

## Patentansprüche

1. Handhabungseinrichtung (100) zum Handhaben eines Metallbauteils (130) zwischen einer Ofeneinrichtung (140) und einer Weiterverarbeitungseinrichtung, wobei die Handhabungseinrichtung (100) aufweist
eine Temperierkammer (110), in welche das Metallbauteil (130) einführbar ist,
wobei die Temperierkammer (110) eine Temperiereinrichtung zum Temperieren des Metallbauteils (130) aufweist,
eine Verfahreinrichtung, welche derart eingerichtet ist, dass die Temperierkammer (110) zwischen einer Aufnahmeposition, in welcher das Metallbauteil (130) aus der Ofeneinrichtung (140) in die Temperierkammer (110) beförderbar ist, und einer Abgabeposition, in welcher das Metallbauteil (130) von der Temperierkammer (110) an die Weiterverarbeitungseinrichtung beförderbar ist, verfahrbar ist, und
eine Fördereinrichtung (120), welche derart eingerichtet ist, dass das Metallbauteil (130) in der Aufnahmeposition mittels der Fördereinrichtung (120) zwischen der Ofeneinrichtung (140) und der Temperierkammer (110) beförderbar ist und/oder dass das Metallbauteil (130) in der Abgabeposition mittels der Fördereinrichtung (120) zwischen der Temperierkammer (110) und der Weiterverarbeitungseinrichtung beförderbar ist,
wobei die Fördereinrichtung (120) mit der Temperierkammer (110) derart gekoppelt ist, dass die Fördereinrichtung (120) in die Temperierkammer (110) ein- und ausfahrbar ist.

2. Handhabungseinrichtung (100) gemäß Anspruch 1,
wobei die Verfahreinrichtung ferner derart eingerichtet ist, dass die Temperierkammer (110) zwischen einer Mehrzahl von beabstandeten Aufnahmepositionen, in welchen das Metallbauteil (130) aus der Ofeneinrichtung (140) in die Temperierkammer (110) beförderbar ist, und der Abgabeposition verfahrbar ist.

3. Handhabungseinrichtung (100) gemäß Anspruch 1 oder 2,
wobei die Temperierkammer (110) zumindest eine Öffnung aufweist, durch welche das Metallbauteil (130) in die Temperierkammer (110) beförderbar ist, und
wobei die Temperierkammer (110) ferner eine Schließeinrichtung aufweist, mittels welcher die Öffnung selektiv verschließbar ist,
wobei die Verfahreinrichtung insbesondere einen Riemenantrieb, einen Kettenantrieb, einen hydraulischen Antrieb, einen elektrischen Antrieb und/oder einen Linearmotor aufweist.

4. Handhabungseinrichtung (100) gemäß einem der Ansprüche 1 bis 3,
wobei die Temperiereinrichtung derart ausgebildet ist, dass in der Temperierkammer (110) Raumbereiche (T1, T2, T3) einstellbar temperierbar sind, um in der Temperierkammer (110) das Metallbauteil (130) mit einem ortsabhängigen Temperaturprofil zu beaufschlagen.

5. Handhabungseinrichtung (100) gemäß einem der Ansprüche 1 bis 4,
wobei die Temperiereinrichtung derart ausgebildet ist, dass mittels Führens eines Fluids mit einer vorbestimmten Temperatur in zumindest einem der Raumbereiche (T1, T2, T3) die Temperatur des Metallbauteils (130) in dem jeweiligen Raumbereich (T1, T2, T3) einstellbar ist.

6. Handhabungseinrichtung (100) gemäß einem der Ansprüche 1 bis 5,
wobei die Temperiereinrichtung derart eingerichtet ist, dass ein Gehäuse oder Gehäuseabschnitt der Temperierkammer auf eine vorbestimmte Temperatur erwärmbar ist oder sind, sodass in der Temperierkammer (110) das Metallbauteil mit einem ortsabhängigen Temperaturprofil beaufschlagbar ist.

7. Handhabungseinrichtung (100) gemäß Anspruch 5 oder 6,
wobei die Temperiereinrichtung zumindest einen Fluidkanal aufweist, durch den das Fluid geführt ist.

8. Handhabungseinrichtung (100) gemäß einem der Ansprüche 1 bis 7,
wobei die Temperiereinrichtung ein elektrisches Heizelement aufweist,
wobei das elektrische Heizelement derart steuerbar ist, dass ein Gehäuse oder ein Gehäuseabschnitt mit einer vorbestimmten Temperatur erwärmbar ist,
sodass in der Temperierkammer (110) das Metallbauteil mit einem ortsabhängigen Temperaturprofil beaufschlagbar ist.

9. Handhabungseinrichtung (100) gemäß einem der Ansprüche 1 bis 8,
wobei die Fördereinrichtung derart eingerichtet ist, dass sich die Fördereinrichtung (120) während des Verfahrens der Temperierkammer (110) zwischen der Aufnahmeposition und der Abgabeposition in der Temperierkammer (110) befindet
wobei die Fördereinrichtung (120) insbesondere eine Fördergabel zur Aufnahme des Metallbauteils (130) aufweist.

10. Handhabungseinrichtung (100) gemäß einem der Ansprüche 1 bis 9,
wobei die Temperierkammer (110) derart ausgebildet ist, dass das Metallbauteil (130) in der Temperierkammer (110) kontaktfrei mit einem Gehäuse (112) der Temperierkammer (110) lagerbar ist.

11. Handhabungseinrichtung (100) gemäß einem der Ansprüche 1 bis 9,
wobei die Temperierkammer (110) derart ausgebildet ist, dass das Metallbauteil (130) einen Kontaktbereich mit der Temperierkammer (110) ausbildet, wenn sich das Metallbauteil (130) in der Temperierkammer (110) befindet.

12. Temperierungsvorrichtung zum Temperieren eines Metallbauteils (130), wobei die Temperierungsvorrichtung aufweist
eine Ofeneinrichtung (140) zum Erwärmen des Metallbauteils (130), und
eine Handhabungseinrichtung (100) gemäß einem der Ansprüche 1 bis 11 zum Handhaben des Metallbauteils (130) zwischen der Ofeneinrichtung (140) und der Weiterverarbeitungseinrichtung.

13. Temperierungsvorrichtung gemäß Anspruch 12,
wobei die Ofeneinrichtung (140) zumindest ein erstes Ofenmodul (141) und ein zweites Ofenmodul (142) aufweist,
wobei das erste Ofenmodul (141) beabstandet zu dem zweiten Ofenmodul (142) angeordnet ist,
wobei in dem ersten Ofenmodul (141) das Metallbauteil (130) erwärmbar ist und in dem zweiten Ofenmodul (142) ein weiteres Metallbauteil erwärmbar ist, wobei die Handhabungseinrichtung (100) derart ausgebildet ist,
dass die Temperierkammer (110) in die Aufnahmeposition verfahrbar ist, in welcher das Metallbauteil (130) aus dem ersten Ofenmodul (141) in die Temperierkammer (110) beförderbar ist, und
dass die Temperierkammer (110) in eine weitere Aufnahmeposition verfahrbar ist, in welcher das weitere Metallbauteil aus dem zweiten Ofenmodul (142) in die Temperierkammer (110) beförderbar ist,

14. Temperierungsvorrichtung gemäß Anspruch 12 oder 13, ferner aufweisend
die Weiterverarbeitungseinrichtung,
wobei die Weiterverarbeitungseinrichtung insbesondere eine Umformvorrichtung zum Umformen des Metallbauteils (130) oder insbesondere eine Presshärtevorrichtung zum gezielten Abkühlen und Umformen des Metallbauteils (130) aufweist.

15. Handhabungsverfahren zum Handhaben eines Metallbauteils (130) mittels einer Handhabungseirichtung (100), wobei das Handhabungsverfahren aufweist
Verfahren einer Temperierkammer (110) in eine Aufnahmeposition, wobei die Temperierkammer (110) eine Temperiereinrichtung zum Temperieren des Metallbauteils (130) aufweist,
Befördern des Metallbauteils (130) von der Ofeneinrichtung (140) in die Temperierkammer (110) mittels einer Fördereinrichtung (120), wenn die Temperierkammer (110) in die Aufnahmeposition verfahren ist,
Temperieren des Metallbauteils (130) in der Temperierkammer,
Verfahren der Temperierkammer (110) in die Abgabeposition, und
Befördern des Metallbauteils (130) von der Temperierkammer (110) zu der Weiterverarbeitungseinrichtung mittels der Fördereinrichtung (120), wenn die Temperierkammer (110) in die Aufnahmeposition verfahren ist,
wobei die Fördereinrichtung (120) mit der Temperierkammer (110) derart gekoppelt ist, dass die Fördereinrichtung (120) in die Temperierkammer (110) ein- und ausfahrbar ist.

## Claims

1. Handling device (100) for handling a metal component part (130) between a furnace device (140) and a further processing device,
wherein the handling device (100) comprises
a temperature-control chamber (110), into which the metal component part (130) is placeable,
wherein the temperature-control chamber (110) comprises a temperature-control unit for temperature controlling the metal component part (130),
a traversing device that is arranged in such a way that the temperature-control chamber (110) is displaceable between a receiving position, in which the metal component part (130) is conveyable from the furnace device (140) into the temperature-control chamber (110), and a dispensing position, in which the metal component part (130) is conveyable from the temperature-control chamber (110) to the further processing device, and
a conveying device (120) that is arranged in such a way that in the receiving position the metal component part (130) is conveyable between the furnace device (140) and the temperature-control chamber (110) by the conveying device (120) and/or that in the dispensing position the metal component part (130) is conveyable between the temperature-control chamber (110) and the further processing device by the conveying device (120),
wherein the conveying device (120) is coupled to the temperature-control chamber (110) in such a way that the conveying device (120) is movable into and out of the temperature-control chamber (110).

2. Handling device (100) according to claim 1,
wherein the traversing device is furthermore arranged in such a way that the temperature-control chamber (110) is displaceable between a plurality of spaced-apart receiving positions, in which the metal component part (130) is conveyable from the furnace device (140) into the temperature control chamber (110), and the dispensing position.

3. Handling device (100) according to claim 1 or 2,
wherein the temperature-control chamber (110) comprises at least one opening, through which the metal component part (130) is conveyable into the temperature-control chamber (110), and
wherein the temperature-control chamber (110) furthermore comprises a closing device, by which the opening is selectively closeable,
wherein the traversing device in particular comprises a belt drive, a chain drive, a hydraulic drive, an electric drive and/or a linear motor.

4. Handling device (100) according to one of the claims 1 to 3,
wherein the temperature-control unit is designed in such a way that spatial regions (T1, T2, T3) in the temperature-control chamber (110) are temperable in a controlled manner in order to act upon the metal component part (130) with a location-dependent temperature profile in the temperature-control chamber (110).

5. Handling device (100) according to one of the claims 1 to 4,
wherein the temperature-control unit is designed in such a way that the temperature of the metal component part (130) is adjustable in at least one of the spatial regions (T1, T2, T3) by guiding a fluid with a predetermined temperature in the respective spatial region (T1, T2, T3).

6. Handling device (100) according to one of the claims 1 to 5,
wherein the temperature-control unit is arranged in such a way that a housing or a housing section of the temperature-control chamber is heatable up to a predetermined temperature such that the metal component part can be acted upon with a location-dependent temperature profile in the temperature-control chamber (110).

7. Handling device (100) according to claim 5 or 6,
wherein the temperature-control unit comprises at least one fluid channel, through which the fluid is guided.

8. Handling device (100) according to one of the claims 1 to 7,
wherein the temperature-control unit comprises an electric heating element,
wherein the electric heating element is controllable in such a way that a housing or a housing section is heatable up with a predetermined temperature such that the metal component part can be acted upon with a location-dependent temperature profile in the temperature-control chamber (110).

9. Handling device (100) according to one of the claims 1 to 8,
wherein the conveying device is arranged in such a way that the conveying device (120) is situated in the temperature-control chamber (110) during the displacement of the temperature-control chamber (110) between the receiving position and the dispensing position,
wherein die conveying device (120) in particular comprises a conveying fork for receiving the metal component part (130).

10. Handling device (100) according to one of the claims 1 to 9,
wherein the temperature-control chamber (110) is designed in such a way that the metal component part (130) is placeable into the temperature-control chamber (110) without contacting a housing (112) of the temperature-control chamber (110).

11. Handling device (100) according to one of the claims 1 to 9,
wherein the temperature-control chamber (110) is designed in such a way that the metal component part (130) forms a contact area with the temperature-control chamber (110) when the metal component part (130) is situated in the temperature-control chamber (110).

12. Temperature-control unit for tempering a metal component part (130), wherein the temperature-control unit comprises
a furnace device (140) for heating up the metal component part (130) and
a handling device (100) according to one of the claims 1 to 11 for handling the metal component part (130) between the furnace device (140) and the further processing device.

13. Temperature-control unit according to claim 12,
wherein the furnace device (140) comprises at least a first furnace module (141) and a second furnace module (142),
wherein the first furnace module (141) is arranged spaced apart from the second furnace module (142),
wherein the metal component part (130) is heatable up in the first furnace module (141) and an additional metal component part is heatable up in the second furnace module (142),
wherein the handling device (100) is designed in such a way
that the temperature-control chamber (110) is displaceable into the receiving position, in which the metal component part (130) is conveyable from the first furnace module (141) into the temperature-control chamber (110), and
that the temperature-control chamber (110) is displaceable into an additional receiving position, in which the additional metal component part is conveyable from the second furnace module (142) into the temperature-control chamber (110).

14. Temperature-control unit according to claim 12 or 13, further comprising
the further processing device,
wherein the further processing device in particular comprises a forming tool for forming the metal component part (130) or in particular a press-hardening tool for purposefully cooling and forming the metal component part (130).

15. Handling method for handling a metal component part (130) by a handling device (100), wherein the handling method comprises
displacing a temperature-control chamber (110) into a receiving position, wherein the temperature-control chamber (110) comprises a temperature-control unit for tempering the metal component part (130),
conveying the metal component part (130) from the furnace device (140) into the temperature-control chamber (110) by a conveying device (120) when the temperature-control chamber (110) is displaced into the receiving position,
tempering the metal component part (130) in the temperature-control chamber,
displacing the temperature-control chamber (110) into the dispensing position, and
conveying the metal component part (130) from the temperature-control chamber (110) to the further processing device by the conveying device (120) when the temperature chamber (110) is displaced into the receiving position, wherein the conveying device (120) is coupled to the temperature-control chamber (110) in such a way that the conveying device (120) is movable into and out of the temperature-control chamber (110).

## Revendications

1. Dispositif de manipulation (100) pour manipuler un composant en métal (130) entre un dispositif de four (140) et un dispositif de traitement ultérieur,
**caractérisé en ce que** le dispositif de manipulation (100) présente
une chambre de régulation de température (110), dans lequel le composant en métal (130) peut être introduit,
la chambre de régulation de température (110) présentant un dispositif de régulation de température pour réguler la température du composant en métal (130),
un dispositif de déplacement, qui est mis au point de telle manière que la chambre de régulation de température (110) peut être déplacée entre une position de réception, dans laquelle le composant en métal (130) peut être transporté hors du dispositif de four (140) dans la chambre de régulation de température (110), et une position de transfert, dans laquelle le composant en métal (130) peut être transporté de la chambre de régulation de température (110) au dispositif de traitement ultérieur, et
un dispositif de transport (120), qui est mis au point de telle manière que le composant en métal (130) peut être transporté, dans la position de réception, au moyen du dispositif de transport (120) entre le dispositif de four (140) et la chambre de régulation de température (110), et/ou de telle manière que le composant en métal (130) peut être transporté, dans la position de transfert, au moyen du dispositif de transport (120) entre la chambre de régulation de température (110) et le dispositif de traitement ultérieur,
le dispositif de transport (120) étant couplé à la chambre de régulation de température (110) de telle manière que le dispositif de transport (120) peut être rentré dans la chambre de régulation de température (110) et être sorti.

2. Dispositif de manipulation (100) selon la revendication 1,
**caractérisé en ce que** le dispositif de déplacement est mis en outre au point de telle manière que la chambre de régulation de température (110) peut être déplacée entre une multitude de positions de réception espacées, dans lesquelles le composant en métal (130) peut être transporté hors du dispositif de four (140) dans la chambre de régulation de température (110), et la position de transfert.

3. Dispositif de manipulation (100) selon la revendication 1 ou 2,
**caractérisé en ce que** la chambre de régulation de température (110) présente au moins une ouverture, par laquelle le composant en métal (130) peut être transporté dans la chambre de régulation de température (110),
et
**en ce que** la chambre de régulation de température (100) présente en outre un dispositif de fermeture, au moyen duquel l'ouverture peut être fermée de manière sélective,
**en ce que** le dispositif de déplacement présente en particulier un entraînement à courroie, un entraînement à chaîne, un entraînement hydraulique, un entraînement électrique et/ou un moteur linéaire.

4. Dispositif de manipulation (100) selon l'une quelconque des revendications 1 à 3, **caractérisé en ce que** le dispositif de régulation de température est réalisé de telle manière que la température de zones d'espace (T1, T2, T3) peut être régulée par réglage dans la chambre de régulation de température (110) afin de soumettre dans la chambre de régulation de température (110) le composant en métal (130) à l'action d'un profil de température dépendant de la localisation.

5. Dispositif de manipulation (100) selon l'une quelconque des revendications 1 à 4, **caractérisé en ce que** le dispositif de régulation de température est réalisé de telle manière que la température du composant en métal (130) dans la zone d'espace (T1, T2, T3) respective peut être réglée au moyen d'un acheminement d'un fluide à une température prédéfinie dans au moins une des zones d'espace (T1, T2, T3).

6. Dispositif de manipulation (100) selon l'une quelconque des revendications 1 à 5, **caractérisé en ce que** le dispositif de régulation de température est mis au point de telle manière qu'une enceinte ou une section d'enceinte de la chambre de régulation de température peut ou peuvent être chauffées à une température prédéfinie de sorte que le composant en métal peut être soumis à l'action d'un profil de température dépendant de la localisation dans la chambre de régulation de température (110).

7. Dispositif de manipulation (100) selon la revendication 5 ou 6,
**caractérisé en ce que** le dispositif de régulation de température présente au moins un canal de fluide, à travers lequel le fluide est acheminé.

8. Dispositif de manipulation (100) selon l'une quelconque des revendications 1 à 7, **caractérisé en ce que** le dispositif de régulation de température présente un élément chauffant électrique,
**en ce que** l'élément chauffant électrique peut être commandé de telle manière qu'une enceinte ou une section d'enceinte peut être chauffée à une température prédéfinie de sorte que le composant en métal peut être soumis à l'action d'un profil de température dépendant de la localisation dans la chambre de régulation de température (110).

9. Dispositif de manipulation (100) selon l'une quelconque des revendications 1 à 8,
**caractérisé en ce que** le dispositif de transport est mis au point de telle manière que le dispositif de transport (120) se trouve dans la chambre de régulation de température (110) au cours du déplacement de la chambre de régulation de température (110) entre la position de réception et la position de transfert,
**en ce que** le dispositif de transport (120) présente en particulier une fourche de transport pour recevoir le composant en métal (130).

10. Dispositif de manipulation (100) selon l'une quelconque des revendications 1 à 9,
**caractérisé en ce que** la chambre de régulation de température (110) est réalisée de telle manière que le composant en métal (130) peut être monté dans la chambre de régulation de température (110) sans contact avec une enceinte (112) de la chambre de régulation de température (110).

11. Dispositif de manipulation (100) selon l'une quelconque des revendications 1 à 9,
**caractérisé en ce que** la chambre de régulation de température (110) est réalisée de telle manière que le composant en métal (130) réalise une zone de contact avec la chambre de régulation de température (110), quand le composant en métal (130) se trouve dans la chambre de régulation de température (110).

12. Système de régulation de température pour réguler la température d'un composant en métal (130), **caractérisé en ce que** le système de régulation de température présente
un dispositif de four (140) pour chauffer le composant en métal (130), et
un dispositif de manipulation (100) selon l'une quelconque des revendications 1 à 11 pour manipuler le composant en métal (130) entre le dispositif de four (140) et le dispositif de traitement ultérieur.

13. Système de régulation de température selon la revendication 12,
**caractérisé en ce que** le dispositif de four (140) présente au moins un premier module de four (141) et un deuxième module de four (142),
**en ce que** le premier module de four (141) est disposé de manière espacée par rapport au deuxième module de four (142),
**en ce que** le composant en métal (130) peut être chauffé dans le premier module de four (141) et qu'un autre composant en métal peut être chauffé dans le deuxième module de four (142),
**en ce que** le dispositif de manipulation (100) est réalisé de telle manière
que la chambre de régulation de température (110) peut être déplacée dans la position de réception, dans laquelle le composant en métal (130) peut être transporté hors du premier module de four (141) dans la chambre de régulation de température (110), et
que la chambre de régulation de température (110) peut être déplacée dans une autre position de réception, dans laquelle l'autre composant en métal peut être transporté hors du deuxième module de four (142) dans la chambre de régulation de température (110).

14. Système de régulation de température selon la revendication 12 ou 13, présentant en outre le dispositif de traitement ultérieur,
**caractérisé en ce que** le dispositif de traitement ultérieur présente en particulier un système de mise en forme pour mettre en forme le composant en métal (130) ou en particulier un système de trempe sous presse pour refroidir et à mettre en forme de manière ciblée le composant en métal (130).

15. Procédé de manipulation pour manipuler un composant en métal (130) au moyen d'un dispositif de manipulation (100), **caractérisé en ce que** le procédé de manipulation présente les étapes suivantes :
le déplacement d'une chambre de régulation de température (110) dans une position de réception, la chambre de régulation de température (110) présentant un dispositif de régulation de température pour réguler la température du composant en métal (130),
le transport du composant en métal (130) du dispositif de four (140) dans la chambre de régulation de température (110) au moyen d'un dispositif de transport (120) quand la chambre de régulation de température (110) est déplacée dans la position de réception,
la régulation de température du composant en métal (130) dans la chambre de régulation de température,
le déplacement de la chambre de régulation de température (110) dans la position de transfert, et
le transport du composant en métal (130) de la chambre de régulation de température (110) en direction du dispositif de traitement ultérieur au moyen du dispositif de transport (120) quand la chambre de régulation de température (110) est déplacée dans la position de réception,
le dispositif de transport (120) étant couplé à la chambre de régulation de température (110) de telle manière que le dispositif de transport (120) peut être rentré dans la chambre de régulation de température (110) et peut être sorti.
